# EUROPEAN PATENT APPLICATION

(11) **EP 4 566 685 A1**
(43) Date of publication of application: **11.06.2025**
(21) Application number: 23850335.3
(22) Date of filing: 26.07.2023
(51) Int. Cl.: A63B 69/36, A63B 24/00, A63B 71/06

(54) **METHOD, SYSTEM, AND NON-TRANSITORY COMPUTER-READABLE RECORDING MEDIUM FOR PROVIDING INFORMATION ABOUT TARGET DIRECTION APPLIED TO GOLF SHOT OR GOLF SWING**

(30) Priority: 02.08.2022 KR 20220096394
(71) Applicant: Creatz Inc., Suwon-si, Gyeonggi-do 16690 (KR)
(72) Inventor: SUK, Yong Ho, Seongnam-si, Gyeonggi-do 13588 (KR); SUK, Jey Ho, Seoul 06587 (KR); CHOI, Hyeon Seok, Seoul 06314 (KR); LEE, Dong Hun, Goyang-si, Gyeonggi-do 10546 (KR); LEE, Kyong Jong, Suwon-si, Gyeonggi-do 16699 (KR)
(74) Representative: Ullrich & Naumann PartG mbB
(86) International application number: PCT/KR2023/010865
(87) International publication number: WO 2024/029829

(57) **Abstract**

According to one aspect of the present invention, there is provided a method for providing information on a target direction applied to a golf shot or golf swing, the method comprising the steps of: acquiring position information of at least one ball; and determining a target direction applied to a golf shot or golf swing of a user, with reference to the acquired position information of the at least one ball.

## Description

### FIELD OF THE INVENTION

The present invention relates to a method, system, and non-transitory computer-readable recording medium for providing information on a target direction applied to a golf shot or golf swing.

### BACKGROUND

In recent years, the number of people choosing golf as a hobby or sporting activity has been rapidly increasing as the development of digital technology has brought more leisure time into the daily lives of modern people. Accordingly, novice golfers take a lot of swing practice on screen golf courses or driving ranges.

However, even though the novice golfers take a lot of swing practice, it is often found in an actual round that they do not strike a ball as well as they did in practice, or the ball does not go where they want it to go. This is most likely due to overlooking the importance of aiming for setting a target direction of the ball, and alignment for aligning the body to the target direction.

That is, no matter how good a swing is, it will be meaningless if an aiming direction for a target and body alignment to the aiming direction are incorrect, so that it is necessary to take swing practice involving correct aiming and alignment in order to enhance golf skills.

In this connection, the inventor(s) present a technique for acquiring position information of at least one ball, and determining a target direction applied to a golf shot or golf swing of a user, with reference to the acquired position information of the at least one ball, thereby assisting the user to take swing practice involving aiming and alignment and enhancing the user's golf skills.

### SUMMARY OF THE INVENTION

One object of the present invention is to solve all the above-described problems in the prior art.

Another object of the invention is to determine a direction of an imaginary straight line connecting positions of a plurality of balls as a target direction applied to a golf shot or golf swing, thereby easily assisting in a user's aiming and alignment without a specialized tool.

Yet another object of the invention is to provide visual feedback on a target direction applied to a golf shot or golf swing, thereby allowing a user to intuitively identify whether the target direction is determined.

The representative configurations of the invention to achieve the above objects are described below.

According to one aspect of the invention, there is provided a method for providing information on a target direction applied to a golf shot or golf swing, the method comprising the steps of: acquiring position information of at least one ball; and determining a target direction applied to a golf shot or golf swing of a user, with reference to the acquired position information of the at least one ball.

According to another aspect of the invention, there is provided a system for providing information on a target direction applied to a golf shot or golf swing, the system comprising: an information acquisition unit configured to acquire position information of at least one ball; and an information determination unit configured to determine a target direction applied to a golf shot or golf swing of a user, with reference to the acquired position information of the at least one ball.

In addition, there are further provided other methods and systems to implement the invention, as well as non-transitory computer-readable recording media having stored thereon computer programs for executing the methods.

According to the invention, it is possible to determine a direction of an imaginary straight line connecting positions of a plurality of balls as a target direction applied to a golf shot or golf swing, thereby easily assisting in a user's aiming and alignment without a specialized tool.

According to the invention, it is possible to provide visual feedback on a target direction applied to a golf shot or golf swing, thereby allowing a user to intuitively identify whether the target direction is determined.

### BRIEF DESCRIPTION OF THE DRAWINGS

FIG. 1 specifically shows the internal configuration of an information provision system according to one embodiment of the invention.
FIG. 2 illustratively shows a situation in which the information provision system according to the invention is utilized in a virtual golf simulation system according to one embodiment of the invention.
FIGS. 3 to 5 illustratively show how signal information is provided on the basis of ball positions according to one embodiment of the invention.

### DETAILED DESCRIPTION

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the positions or arrangements of individual elements within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

A sensing module according to one embodiment of the invention may acquire information on shot data (e.g., a launch angle, side angle, ball speed, back spin, and side spin) or time of impact, and transmit the acquired information to a main module.

The main module according to one embodiment of the invention may provide a user with information obtained by combining or analyzing the information received from the sensing module.

### Configuration of an information provision system

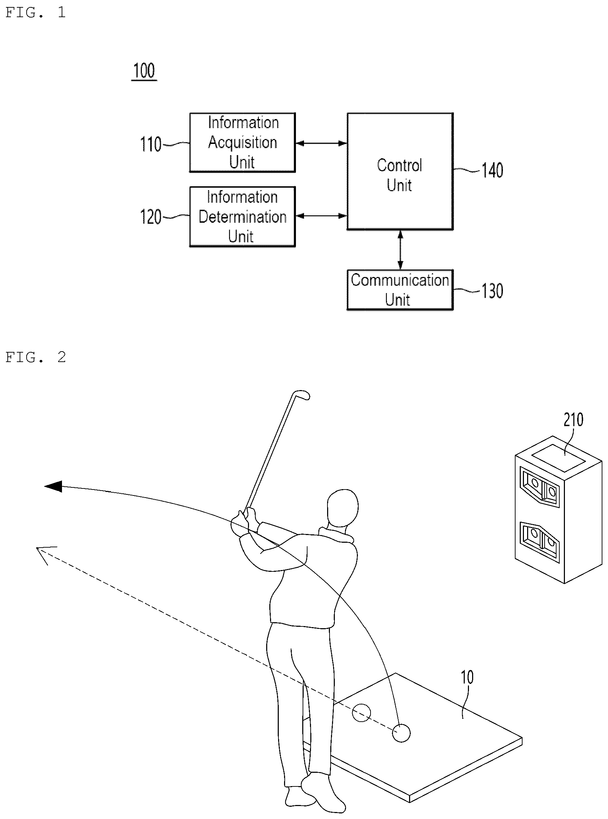

FIG. 1 specifically shows the internal configuration of an information provision system 100 according to one embodiment of the invention.

Referring to FIG. 1, the information provision system 100 according to one embodiment of the invention may comprise an information acquisition unit 110, an information determination unit 120, a communication unit 130, and a control unit 140. According to one embodiment of the invention, at least some of the information acquisition unit 110, the information determination unit 120, the communication unit 130, and the control unit 140 may be program modules that communicate with an external system (not shown). The program modules may be included in the information provision system 100 in the form of operating systems, application program modules, and other program modules, while they may be physically stored in a variety of commonly known storage devices. Further, the program modules may also be stored in a remote storage device that may communicate with the information provision system 100. Meanwhile, such program modules may include, but are not limited to, routines, subroutines, programs, objects, components, and data structures for performing specific tasks or executing specific abstract data types according to the invention as will be described below.

Meanwhile, the above description is illustrative although the information provision system 100 has been described as above, and it will be apparent to those skilled in the art that at least a part of the components or functions of the information provision system 100 may be implemented or included in a known virtual golf simulation system, as necessary. Further, in some cases, all the functions and components of the information provision system 100 may be implemented or included in a virtual golf simulation system 210.

First, the information acquisition unit 110 according to one embodiment of the invention may acquire position information of at least one ball. For example, the at least one ball according to one embodiment of the invention may include a ball to be struck by a user (e.g., a first ball) and at least one ball for target direction setting (e.g., a second ball and/or a third ball). As another example, the at least one ball according to one embodiment of the invention may include a single ball for target direction setting (e.g., a fourth ball).

Specifically, the position information of the plurality of balls according to one embodiment of the invention may include coordinate information of the ball to be struck by the user (e.g., central coordinates of the first ball) and coordinate information of the at least one ball for target direction setting (e.g., central coordinates of the second and/or third balls). Further, the position information of the single ball according to one embodiment of the invention may include coordinate information of the single ball for target direction setting (e.g., central coordinates of the fourth ball).

Further, the information acquisition unit 110 may acquire information on a trajectory of the struck ball from the user's golf shot or golf swing.

Specifically, the information acquisition unit 110 according to one embodiment of the invention may acquire a plurality of images of the ball using one imaging module, and acquire information on a motion trajectory of the ball in a reference space defined in a three-dimensional coordinate system, on the basis of a relationship between a position where the imaging module is disposed and each of a plurality of positions determined by a projection from a viewpoint of the imaging module to the ball on a background, with reference to the plurality of acquired images.

Meanwhile, it is noted that for further details of acquiring information on a trajectory of a ball according to one embodiment of the invention, reference may be made to the disclosures of Korean Patent Application No. 10-2018-0130225 filed by the applicant(s), which are deemed to be incorporated herein by reference in their entirety.

Next, the information determination unit 120 according to one embodiment of the invention may determine a target direction applied to a golf shot or golf swing of a user, with reference to the acquired position information of the at least one ball.

For example, a direction of an imaginary straight line connecting the positions of the plurality of balls according to one embodiment of the invention may be determined as the target direction applied to the user's golf shot or golf swing. As another example, when a plurality of imaginary straight lines are formed by connecting the positions of the plurality of balls according to one embodiment of the invention, a direction of the imaginary straight line determined by the user's selection may be determined as the target direction applied to the user's golf shot or golf swing.

Specifically, a direction of an imaginary straight line formed with reference to the coordinate information of the ball to be struck by the user and the at least one ball for target direction setting according to one embodiment of the invention may be determined as the target direction applied to the golf shot or golf swing.

More specifically, a direction of an imaginary straight line formed by connecting the central coordinates of the first ball to be struck by the user and the second ball for target direction setting according to one embodiment of the invention may be determined as the target direction applied to the golf shot or golf swing.

Further, when one imaginary straight line may be formed by connecting the central coordinates of the first ball to be struck by the user and the central coordinates of the second and third balls for target direction setting according to one embodiment of the invention, a direction of the formed imaginary straight line may be determined as the target direction applied to the user's golf shot or golf swing. Further, when two imaginary straight lines are formed by connecting the central coordinates of the first ball to be struck by the user and the central coordinates of the second and third balls for target direction setting according to one embodiment of the invention, a direction of the imaginary straight line determined by the user's selection may be determined as the target direction applied to the user's golf shot or golf swing.

However, the number of balls for target direction setting according to one embodiment of the invention is not limited, and may be diversely changed as long as the objects of the invention may be achieved.

As another example, a direction of an imaginary straight line connecting the positions of an indicating point and the single ball according to one embodiment of the invention may be determined as the target direction applied to the user's golf shot or golf swing. The indicating point according to one embodiment of the invention refers to a fixed position, or a position fixed relative to an instrument (e.g., a launch monitor) including the information provision system 100, and may be displayed to the user as visualized with a laser or the like.

Specifically, a direction of an imaginary straight line formed with reference to the coordinate information of the indicating point and the single ball for target direction setting may be determined as the target direction applied to the golf shot or golf swing.

More specifically, a direction of an imaginary straight line formed by connecting the coordinates of the indicating point visualized with a laser and the central coordinates of the fourth ball for target direction setting according to one embodiment of the invention may be determined as the target direction applied to the golf shot or golf swing.

Meanwhile, the user may be provided with signal information dynamically determined on the basis of the positions of the plurality of balls according to one embodiment of the invention. The signal information according to one embodiment of the invention refers to sensory information provided to the user to enable the user to recognize whether the target direction is determined according to the positions of the plurality of balls, and may include, for example, visual feedback (e.g., a visual signal dynamically determined on the basis of the positions of the plurality of balls) and aural feedback (e.g., an audio signal dynamically determined on the basis of the positions of the plurality of balls.

Specifically, in response to one imaginary straight line being formed by connecting the positions of the plurality of balls according to one embodiment of the invention, the user may be provided with first visual feedback indicating that the target direction applied to the golf shot or golf swing is determined.

For example, when there is one ball for target direction setting according to one embodiment of the invention, a direction of an imaginary straight line formed by connecting the central coordinates of the first ball to be struck by the user and the second ball for target direction setting may be determined as the target direction applied to the golf shot or golf swing. Then, the user may be provided with a green signal (e.g., light) indicating that the target direction applied to the golf shot or golf swing according to one embodiment of the invention is determined.

As another example, the green signal (e.g., light) indicating that the target direction applied to the golf shot or golf swing according to one embodiment of the invention is determined may be provided to the user together with an audio signal (e.g., a beep or voice prompt).

Further, in response to a plurality of imaginary straight lines being formed by connecting the positions of the plurality of balls according to one embodiment of the invention, the user may be provided with second visual feedback indicating that the target direction applied to the golf shot or golf swing is not determined.

For example, when there are a plurality of balls (e.g., the second and third balls) for target direction setting according to one embodiment of the invention, a direction of an imaginary straight line formed by connecting the central coordinates of the first ball to be struck by the user and the central coordinates of the second and third balls for target direction setting may be determined as the target direction applied to the golf shot or golf swing. However, when the first, second, and third balls according to one embodiment of the invention are not positioned in line, a plurality of imaginary straight lines are inevitably formed between the first, second, and third balls, which may indicate that the target direction applied to the golf shot or golf swing is not determined.

In other words, when the ball to be struck and the two or more balls for target direction setting according to one embodiment of the invention are not positioned in line, the user may be provided with an orange or yellow signal (e.g., light) indicating that the target direction applied to the golf shot or golf swing is not determined, unless there are special circumstances (e.g., the case in which a direction of one straight line is determined on the basis of the user's selection).

As another example, the orange or yellow signal (e.g., light) indicating that the target direction applied to the golf shot or golf swing according to one embodiment of the invention is not determined may be provided to the user together with an audio signal (e.g., a beep or voice prompt).

This allows the user to easily and conveniently perform aiming and alignment without the need to carry a tool (e.g., an alignment stick), and to intuitively identify whether the target direction is determined.

Meanwhile, according to one embodiment of the invention, there may be provided feedback information generated with reference to a relationship between the direction of the imaginary straight line connecting the positions of the plurality of balls and the trajectory of the struck ball. The feedback information according to one embodiment of the invention may refer to information for assisting in swing posture correction on the basis of whether a swing according to the user's aiming and alignment is matched with a trajectory of the ball according to the user's swing. For example, voice, text, graphics, subtitles, or the like may be provided to the user to remind the user of the need to change a direction, position, or distance of the user's body, head, shoulders, or gaze, so that the user's swing may be optimized for the aiming and alignment.

This allows the user to take swing practice optimized for the user's aiming and alignment, thereby increasing shot accuracy even if a target spot changes.

Next, the communication unit 130 according to one embodiment of the invention may function to enable data transmission/reception from/to the information acquisition unit 110 and the information determination unit 120.

Lastly, the control unit 140 according to one embodiment of the invention may function to control data flow among the information acquisition unit 110, the information determination unit 120, and the communication unit 130. That is, the control unit 140 according to one embodiment of the invention may control data flow into/out of the information provision system 100 or data flow among the respective components of the information provision system 100, such that the information acquisition unit 110, the information determination unit 120, and the communication unit 130 may carry out their particular functions, respectively.

FIG. 2 illustratively shows a situation in which the information provision system according to the invention is utilized in a virtual golf simulation system according to one embodiment of the invention.

As shown in FIG. 2, a virtual golf simulation system 210 at an actual golf course (or an outdoor driving range) may function to implement a virtual golf simulation using information obtained by sensing a golf ball, and may include at least a part of the information provision system 100 according to the invention.

Specifically, the virtual golf simulation system 210 according to one embodiment of the invention may include at least one sensing module and function to acquire a plurality of images related to strike information and direction information of the ball. The virtual golf simulation system 210 may be placed in a location to look down at a moving golf club head, while it may be placed in other locations. Meanwhile, the virtual golf simulation system 210 according to one embodiment of the invention may function similarly to a high-speed camera by sequentially acquiring the plurality of images using at least two cameras having different photographing speeds, or may function similarly to a three-dimensional camera by simultaneously acquiring the plurality of images using two two-dimensional cameras.

Further, the virtual golf simulation system 210 according to one embodiment of the invention may include a main module and function to provide a user with information obtained by combining or analyzing information received from the sensing module (e.g., feedback information generated with reference to a relationship between a direction of an imaginary straight line connecting positions of a plurality of balls and a trajectory of the struck ball). Meanwhile, the virtual golf simulation system 210 according to one embodiment of the invention may include a dedicated processor. The dedicated processor may be provided with a memory means and may have capabilities for numerical operations and graphics processing.

Furthermore, the virtual golf simulation system 210 according to one embodiment of the invention may function to visualize and display signal information (e.g., a visual signal and an audio signal dynamically determined on the basis of the positions of the plurality of balls) and information resulting from the analysis of the virtual golf simulation system 210 (e.g., feedback information generated with reference to the relationship between the direction of the imaginary straight line connecting the positions of the plurality of balls and the trajectory of the struck ball). The virtual golf simulation system 210 may display images via a display means.

However, it is noted that the information provision system 100 according to one embodiment of the invention is not limited only to operating in conjunction with the virtual golf simulation system 210, but may also operate alone without limitation.

Meanwhile, it is noted that the information provision system 100 according to one embodiment of the invention is not limited to being utilized at an actual golf course (or an outdoor driving range), but may be utilized at an indoor golf course.

In this way, the information provision system 100 according to one embodiment of the invention may contribute to enhancing the user's golf skills both indoors and outdoors.

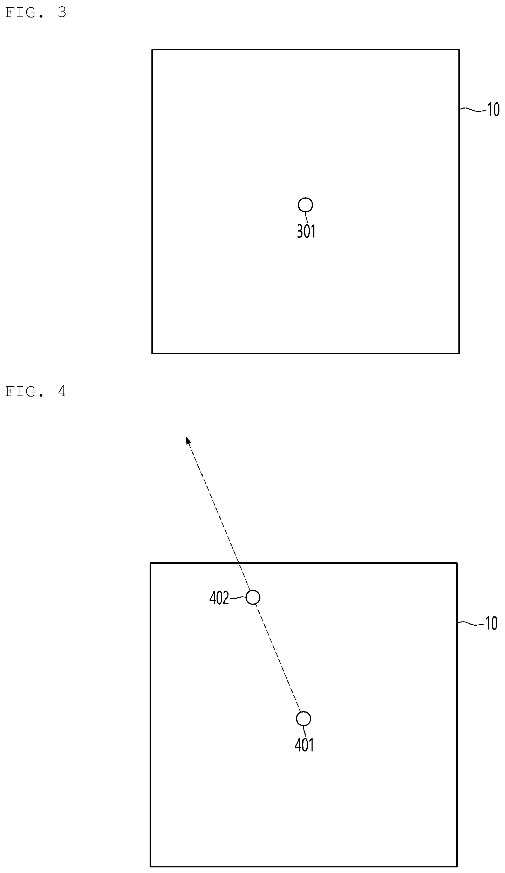

FIGS. 3 to 5 illustratively show how signal information is provided on the basis of ball positions according to one embodiment of the invention.

Referring to FIG. 3, it is shown that a first ball 301 to be struck by a user is placed on a shot unit 10 according to one embodiment of the invention. According to one embodiment of the invention, the user may be provided with a red signal and/or an audio signal indicating that an imaginary line cannot be formed when the first ball 301 to be struck is present alone.

Referring to FIG. 4, it is shown that a first ball 401 to be struck by the user and a second ball 402 for target direction setting are placed on the shot unit 10 according to one embodiment of the invention. Specifically, when there is a single second ball 402 for target direction setting according to one embodiment of the invention, a direction of an imaginary straight line formed by connecting the central coordinates of the first ball 401 to be struck by the user and the second ball 402 for target direction setting may be determined as a target direction applied to the first ball 401 to be struck. Here, the user may be provided with a green signal and/or an audio signal indicating that the target direction applied to the first ball 401 to be struck according to one embodiment of the invention is determined.

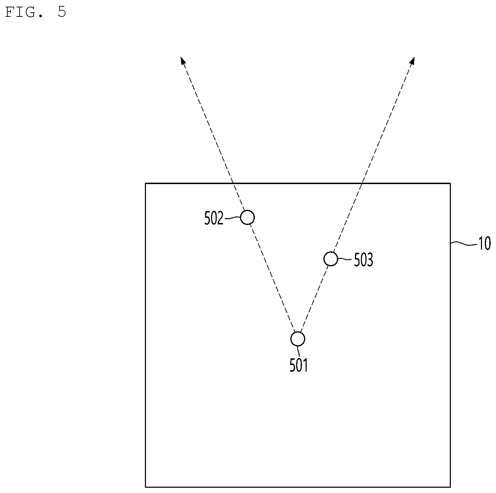

Referring now to FIG. 5**,** it is shown that a first ball 501 to be struck by the user and a second ball 502 and a third ball 503 for target direction setting are placed on the shot unit 10 according to one embodiment of the invention. Specifically, when the second ball 502 and the third ball 503 for target direction setting according to one embodiment of the invention are present, the user may be provided with an orange or yellow signal and/or an audio signal indicating that a target direction applied to the first ball 501 to be struck is not determined, because a plurality of imaginary straight lines are formed by connecting the central coordinates of the first ball 501 to be struck by the user and the central coordinates of the second ball 502 and third ball 503 for target direction setting.

Meanwhile, when the first ball 501, the second ball 502, and the third ball 503 according to one embodiment of the invention are positioned in line and form a single imaginary straight line, the user may be provided with a green signal and/or an audio signal indicating that the target direction applied to the first ball 501 to be struck is determined.

The embodiments according to the invention as described above may be implemented in the form of program instructions that can be executed by various computer components, and may be stored on a computer-readable recording medium. The computer-readable recording medium may include program instructions, data files, and data structures, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler, but also high-level language codes that can be executed by a computer using an interpreter. The above hardware devices may be changed to one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

## Claims

1. A method for providing information on a target direction applied to a golf shot or golf swing, the method comprising the steps of:
acquiring position information of at least one ball; and
determining a target direction applied to a golf shot or golf swing of a user, with reference to the acquired position information of the at least one ball.

2. The method of Claim 1, wherein in the determining step, a direction of an imaginary straight line connecting positions of a plurality of balls is determined as the target direction applied to the golf shot or golf swing.

3. The method of Claim 1, wherein in the determining step, a direction of an imaginary straight line connecting positions of an indicating point and a single ball is determined as the target direction applied to the golf shot or golf swing.

4. The method of Claim 1, wherein in the determining step, the user is provided with signal information dynamically determined on the basis of positions of a plurality of balls.

5. The method of Claim 4, wherein in the determining step, in response to one imaginary straight line being formed by connecting the positions of the plurality of balls, the user is provided with first visual feedback indicating that the target direction applied to the golf shot or golf swing is determined.

6. The method of Claim 4, wherein in the determining step, in response to a plurality of imaginary straight lines being formed by connecting the positions of the plurality of balls, the user is provided with second visual feedback indicating that the target direction applied to the golf shot or golf swing is not determined.

7. A non-transitory computer-readable recording medium having stored thereon a computer program for executing the method of Claim 1.

8. A system for providing information on a target direction applied to a golf shot or golf swing, the system comprising:
an information acquisition unit configured to acquire position information of at least one ball; and
an information determination unit configured to determine a target direction applied to a golf shot or golf swing of a user, with reference to the acquired position information of the at least one ball.

9. The system of Claim 8, wherein a direction of an imaginary straight line connecting positions of a plurality of balls is determined as the target direction applied to the golf shot or golf swing.

10. The system of Claim 8, wherein a direction of an imaginary straight line connecting positions of an indicating point and a single ball is determined as the target direction applied to the golf shot or golf swing.

11. The system of Claim 8, wherein the user is provided with signal information dynamically determined on the basis of positions of a plurality of balls.

12. The system of Claim 11, wherein in response to one imaginary straight line being formed by connecting the positions of the plurality of balls, the user is provided with first visual feedback indicating that the target direction applied to the golf shot or golf swing is determined.

13. The system of Claim 11, wherein in response to a plurality of imaginary straight lines being formed by connecting the positions of the plurality of balls, the user is provided with second visual feedback indicating that the target direction applied to the golf shot or golf swing is not determined.
